Europäisches Patentamt

European Patent Office

Office européen des brevets

(11) Publication number: 0 397 390
A2

# (12) EUROPEAN PATENT APPLICATION

(21) Application number: 90304807.2

(51) Int. Cl.⁵: A47G 27/04

(22) Date of filing: 03.05.90

(30) Priority: 11.05.89 GB 8910870

(43) Date of publication of application:
14.11.90 Bulletin 90/46

(84) Designated Contracting States:
AT BE CH DE DK ES FR GB GR IT LI LU NL SE

(71) Applicant: The Gates Rubber Company
Limited
NCR House 5th Floor 2 Roseburn Gardens
Edinburgh, EH12 5NJ Scotland(GB)

(72) Inventor: Matthews, Bernard R.
4 Baxter Court, Heathhall
Dumfries, Scotland(GB)
Inventor: Moore, Travis
Rowan Lodge, Boatrig, Auldgirth
Dumfries, Scotland DG2 0XP(GB)

(74) Representative: Geldard, David Guthrie et al
URQUHART-DYKES AND LORD Tower House
Merrion Way
Leeds West Yorkshire LS2 8PA(GB)

(54) Carpet underlay.

(57) A carpet underlay comprising a resilient sheet of an elastomeric composition, a coherent backing structure having first and second layers, and means adhering the first layer to a first surface of the resilient sheet, in which the backing structure has a plane of weakness between the first and second layers that allows removal of the second layer without substantially affecting the adhesive bond between the first layer and the resilient sheet.

## FIG.1.

EP 0 397 390 A2

## CARPET UNDERLAY

This invention relates to carpet underlay.

Underlays provide enhanced wear and appearance retention for carpets, and are therefore used in a widespread manner. Carpet is commonly loose-laid over underlay, with restraint provided only around the periphery of the area. However, this is not particularly suitable for installations that are subject to heavy wear, because carpet made to modern practices tends to be dimensionally unstable. One solution newly adopted in the contract carpet trade is to adhere the underlay to the floor, and then to adhere the carpet to the top surface of the underlay.

Problems arise in these fully adhered systems when it is necessary to replace either the carpet or the underlay. The adhesives usually chosen for this system are such that the carpet will remain bonded to the underlay, but the underlay will peel from the adhesive that has been applied to the floor. This can generally be achieved successfully, but in areas where the carpet and underlay are subjected to significant point loads it can be difficult to get clean release. In these regions, therefore, there is a tendency for the underlay to tear and for part of the underlay material to remain adhered to the floor. The torn material must be removed before new carpet and underlay can be applied.

Even in cases where the underlay does peel cleanly from the adhesive that has been applied to the floor this may well be wasteful, as there may be significant useful life left in the underlay.

The present invention addresses these problems, with the objective of providing an underlay that peels cleanly from the floor, or that is reusable, or that fulfills both these objectives.

According to the present invention a carpet underlay comprises a resilient sheet of an elastomeric composition, a coherent backing structure having first and second layers, and means adhering the first layer to a first surface of the resilient sheet, in which the backing structure has a plane of weakness between the first and second layers that allows removal of the second layer without substantially affecting the adhesive bond between the first layer and the resilient sheet.

An underlay according to the invention may be laid with the coherent backing structure in contact with the floor, and with the carpet adhered to the second surface of the resilient sheet, either directly, or through one or more intermediate layers. The strength of the adhesive between the carpet and the underlay will generally be such that when the carpet is lifted the underlay will lift with the carpet, and the underlay will split along the plane of weakness, so simply leaving the second layer of the underlay adhering to the floor. This will provide a clean surface, with no torn sections of the resilient sheet remaining adhered to the floor. Thus, no cleaning operation is necessary, and a second underlay can simply be adhered directly to the remaining second layer, with a new carpet then being adhered to the second surface of the resilient sheet, either directly or through intermediate layers. The process can be repeated indefinitely, and the initial preparation of the floor will thus be preserved for many later underlay applications.

Alternatively, the underlay may be laid with the coherent backing structure uppermost, the carpet then being adhered to the second layer. When the carpet has come to the end of its useful life it can then be lifted, and in so lifting it will peel only the second layer from the underlay, the underlay tearing along the plane of weakness. The bulk of the underlay construction, and in particular the resilient sheet thereof thus remains in position, and a new carpet can be laid thereon, and adhered to the remaining first layer. Two lifetimes of carpet use can thus be achieved from a single underlay, with consequent economic advantage.

Preferably the peel strength in the plane of weakness is no greater than one half, desirably no greater than one third, the cohesive strength of the first layer, the second layer or the resilient sheet. Selection of either of these fractions will ensure that the separation in the plane of weakness occurs preferentially to any other destruction or degradation within the underlay.

In a particular embodiment of the invention the underlay includes a second coherent backing structure having third and fourth layers, and means adhering the third layer to a second surface of the resilient sheet, in which the second backing structure has a plane of weakness between the third and fourth layers that allows removal of the fourth layer without substantially affecting the adhesive bond between the third layer and the resilient sheet, the peel strength of the plane of weakness of the second backing structure being less than or capable of being reduced to less than the peel strength of the plane of weakness of the first said backing structure.

In this construction both of the anticipated advantages can be gained. The underlay will generally be laid with the second backing structure uppermost, so that when the carpet is lifted the underlay will disintegrate along the plane of weakness in the second backing layer. The underlay will remain adhered to the floor, and a new carpet can then be adhered to the first layer of the second backing structure, thus allowing the underlay to be used throughout the wearing life of a second carpet. When the second carpet is lifted the underlay will disintegrate along the plane of weakness of the first backing structure, and this separation will leave a clean layer adhered to the floor, to which a second underlay may be adhered without any further preparation.

Preferably the plane of weakness of the backing structure or of at least one of the backing structures is formed by adhesive means between the adjacent layers of the respective backing structure. This adhesive means may be a substantially continuous layer of adhesive, or it may be a substantially discontinuous layer of adhesive. If discontinuous, the layer may be applied in strips, dots, bars or any other suitable configuration. The plane of weakness of the underlay, when only one such plane is provided, or the uppermost plane when such planes are provided above and below the resilient sheet may be capable of the required disintegration in its natural form. Alternatively, the adhesive used in that plane may be such, or the plane may otherwise be configured, so that the application of heat, either generally or to selected areas, will cause separation of the underlay in the desired plane. The necessary heat may be applied, for example, by using a hot air blow gun, or by incorporating in the underlay when manufactured a pattern of resistance wires to which an electrical current may be applied in order to generate heat which will cause melting of the adhesive and corresponding separation of the underlay in the desired plane of weakness.

Rather than use a simple adhesive in the plane of weakness the backing structure or at least one of the backing structures may be formed from a discontinuous material, the density of the material in the respective plane of weakness being less than the density of the material in either of the layers separated by that plane of weakness. The discontinuous material may be a bonded mat of textile fibres, for example spun bonded polyester or polypropylene, the individual fibres of which are adhered together with adhesive, by heat welding or by any other means. Rather than use a spun bonded construction the backing material may be a foamed structure, the density of the foam along a central plane between the first and second layers being less than the density in the layers, so that the foam will preferentially separate along the plane of lesser density.

In order that the invention may be better understood, specific embodiments of underlay in accordance therewith will now be described in more detail, with reference to the accompanying drawings in which:-

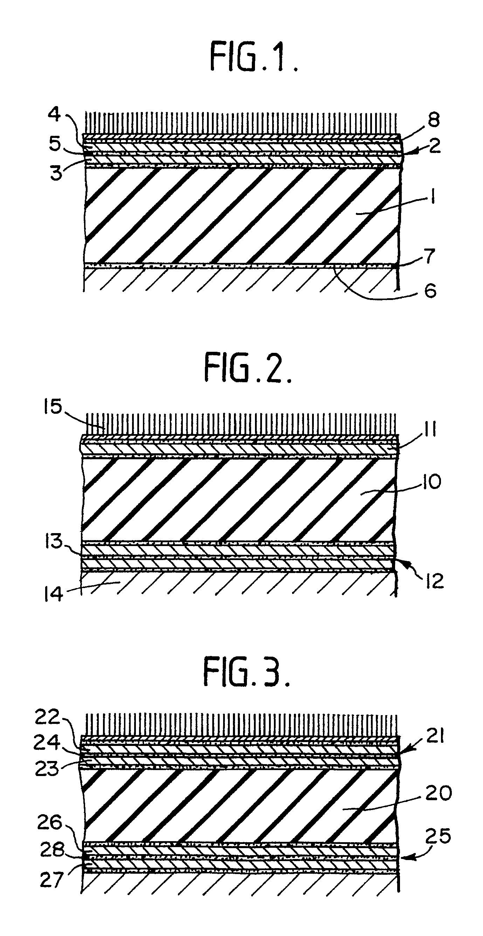

Figure 1 to 3 are cross-sections respectively through first, second and third embodiments of underlay according to the invention, shown in a condition of use.

Figure 1 shows a carpet underlay including a resilient sheet 1 comprising a rubber formulation containing synthetic rubber, calcium carbonate filler, process oil, and other ingredients known to those skilled in the art, which sheet may be formed in a flat profile or waffle configuration, according to the style of material required. A coherent backing structure 2 comprises two layers of papers 3,4 bonded together by means of a starch based adhesive layer 5 such that the peel strength of the adhesive layer is less than one third of the cohesive strength of the individual layers 3,4. The adhesive layer thus forms a plane of weakness. The layer 3 is bonded to a first surface of the resilient sheet by a further adhesive, stronger than that used in layer 5.

In use, the exposed surface 6 of the resilient sheet is bonded to the floor by adhesive 7, stronger than the adhesive in layer 5, and a carpet is bonded to the exposed surface of layer 4 by adhesive 8, again stronger than the adhesive in layer 5. Thus, when the carpet is lifted the layer 4 will lift with carpet and the underlay will disintegrate along the plane of weakness formed by the adhesive 5. The layer 3 and resilient sheet 1 will remain in place, adhered to the floor and a new carpet can be adhered to the layer 3. This underlay can thus be used through the lifetime of two carpets.

By way of another example, Figure 2 shows an underlay construction comprising a resilient sheet 10 of 12 mesh rubber crumb formed into continuous sheet by mixture with a natural rubber latex compound or other polymeric bonding material, and passage through a curing oven. A backing sheet 11 is adhered to the upper surface of the resilient sheet. A coherent backing structure 12 is adhered to the lower side of the resilient sheet and is designed to split internally on peeling, leaving a clean layer of each component of the sandwich, both on the floor substrate and on the underlay. In this example the layers of the sandwich are comprised of spun bonded polyester of 20/50 g.s.m. produced in single presses by conventional methods in which a mat of fibres are adhered together with adhesive or by heat welding. The two materials are then sandwiched together by a second pass down the production equipment in which either a lighter layer of adhesive or more heat welding is applied. The production method is such as to ensure that the peel strength of the intermediate layer 13 is one third of the internal cohesive strength of the other two layers.

In use, the coherent backing structure 12 is adhered to the floor 14, and the backing sheet 11 is adhered to a carpet 15. In each case the adhesive bond is greater than the peel strength of the intermediate layer 13. When the carpet is lifted the underlay will lift with it, and will split along the plane of weakness formed by the layer 13. There will thus be a clean surface left on the floor, with no residual material from the resilient sheet.

Figure 3 shows a third example of underlay construction, comprising a resilient sheet 20, formulated as stated in either of the preceding examples or in any other suitable way. An upper coherent backing structure 21 is bonded to the upper surface of the resilient sheet 20 and comprises two layers 22, 23, secured together in a plane of weakness 24 by an adhesive or other intermediate layer. A lower coherent backing structure 25 is bonded to the lower surface of the resilient sheet 20, and comprises two layers 26, 27 secured together in a plane of weakness 28 by an adhesive or intermediate layer.

The peel strength in the plane of weakness 24 is designed to be less than the peel strength in the plane of weakness 28, and both these peel strengths are designed to be less than the strength of the adhesive bond between layer 23 and resilient sheet 20 and between layer 26 and resilient sheet 20. The particular constructions of the coherent backing sheets 21 and 25 may be as described in either of the foregoing examples.

In use, the exposed surface of the sheet 27 is bonded to the floor, and a carpet is bonded to the exposed surface of the sheet 22, the bonding in each case being such that it is stronger than the strength in either plane of weakness 24 or 28. When the carpet is lifted the underlay will disintegrate along the plane of weakness 24, leaving the remainder of the underlay, and in particular the resilient sheet 20 in position on the floor. A new carpet can then be adhered to the exposed surface of layer 23. When the time comes for the new carpet to be lifted then the underlay will separate along the plane of weakness 28, leaving the layer 27 adhering to floor to provide a clean surface to which a new underlay construction may be adhered.

In either example it will be understood that the actual materials used for the resilient sheet and for the coherent backing structure may be varied from those described. When a coherent backing structure is provided on one surface of the resilient sheet, and the other surface simply carries a backing sheet then that backing sheet can take any suitable form. One particular suitable form is to have that backing sheet in the form of a stabilising sheet having greater dimensional stability than the remainder of the underlay. For example, woven or non-woven scrims or fabrics may be used as a stabilising backing sheet. Another type of stabilising backing sheet is creped paper reinforced by weft threads laid in parallel rows on the paper in the general direction of the crimps therein, the weft threads being secured to the paper by a series of side by side rows of stitches in a direction transverse to the direction of the crimps. Such a backing sheet is described in GB-A-2152875, the entire contents of which are herein incorporated by reference. It may be desirable to prevent any oil that is incorporated in the resilient sheet from migrating through the stabilising backing sheet, and if so then a continuous barrier sheet may be incorporated between the stabilising sheet and the resilient sheet, the barrier sheet being impermeable to the oil in the elastomeric composition. The barrier sheet may, for example, be a sheet of polymeric material, particularly of polyethylene, polypropylene, polyamide or polyester material. The thickness of the sheet should be sufficient to form a totally continuous film, and to avoid problems during handling and manufacture, but not too thick to be unduly bulky and expensive. In other arrangements the backing sheet may itself be a simple impervious sheet, that will also give the necessary dimensional stability.

The various sheets that go to make up the underlay of the invention are, as has already been stated, desirably adhered together. The usual method of making the underlay will be to pass the elastomeric material through a curing oven, the material being supported by a conveyor during the curing process. The coherent backing structure, together with any backing layer to be adhered to the opposite surface of the resilient sheet are brought into contact with the resilient sheet, and it or they must remain effectively secured thereto so that the final composite underlay may be lifted from the conveyor. This requires a firm bond between the layers as there is a degree of adhesion between the rubber and the conveyor that must be broken to achieve separation of the underlay from the conveyor. At the point of separation the materials will still generally be close to the oven temperature of about 150° C, and the adhesives used should therefore be capable of maintaining cohesion and adhesive strength at temperatures of from 100° C to 130° C. Examples of suitable adhesives are disclosed in GB-A2152875.

The examples given have been of underlay structures having a single plane of weakness in coherent backing structures on one or both sides of the resilient sheet. It will be appreciated that the or either coherent backing structure may include more than one plane of weakness, those planes of weakness having different peel strengths. The plane of weakness with the lowest peel strength should be that furthest from the resilient sheet, the strength becoming progressively greater towards the resilient sheet. In this manner an underlay can be designed that will enable more than two carpets to be laid on and peeled from the underlay construction, or it will allow the underlay construction to be peeled from the floor more than once, or even to have both these properties. Formulation of appropriate adhesives to give the required relative bond strength between the various layers is within the abilities of those skilled in the art.

**Claims**

1. A carpet underlay comprising a resilient sheet of an elastomeric composition, a coherent backing structure having first and second layers, and means adhering the first layer to a first surface of the resilient sheet, in which the backing structure has a plane of weakness between the first and second layers that allows removal of the second layer without substantially affecting the adhesive bond between the first layer and the resilient sheet.

2. A carpet underlay according to claim 1 in which the peel strength in the plane of weakness is no greater than one half the cohesive strength of the first layer, the second layer or the resilient sheet.

3. A carpet underlay according to claim 1 in which the peel strength in the plane of weakness is no greater than one third the cohesive strength of the first layer, the second layer or the resilient sheet.

4. A carpet underlay according to any one of the proceeding claims and including a second coherent backing structure having third and fourth layers, and means adhering the third layer to a second surface of the resilient sheet, in which the second backing structure has a plane of weakness between the third and fourth layers that allows removal of the fourth layer without substantially affecting the adhesive bond between the third layer and the resilient sheet, the peel strength of the plane of weakness of the second backing structure being less than, or capable of being reduced to less than the peel strength of the plane of weakness of the first said backing structure.

5. A carpet underlay according to any one of the proceeding claims in which the plane of weakness of the backing structure or at least one of the backing structures is formed by adhesive means between the adjacent layers of the respective backing structure.

6. A carpet underlay according to claim 5 in which the adhesive means is a substantially continuous layer of adhesive.

7. A carpet underlay according to claim 5 in which the adhesive means is a discontinuous layer of adhesive.

8. A carpet underlay according to any one of claims 1 to 4 in which the backing structure or at least one of the backing structures is formed from a discontinuous material, the density of the material in the respective plane of weakness being less than the density of the material in either of the layers separated by that plane of weakness.

9. A carpet underlay according to claim 8 in which the discontinuous material is a bonded mat of textile fibres.

# FIG.1.

# FIG.2.

# FIG.3.